# EUROPEAN PATENT SPECIFICATION

(11) **EP 4 308 428 B1**
(45) Date of publication and mention of the grant of the patent: **28.01.2026**
(21) Application number: 22714248.6
(22) Date of filing: 15.03.2022
(51) Int. Cl.: B60T 1/10, B60T 17/22, B60T 8/40, B60T 7/04, B60T 13/14, B60T 13/58, B60T 13/66, B60T 13/74, F16D 61/00

(54) **BRAKING SYSTEM, BRAKE-BY-WIRE MODULE AND SWITCHING DEVICE**
BREMSSYSTEM, BRAKE-BY-WIRE-MODUL UND SCHALTVORRICHTUNG
SYSTÈME DE FREINAGE, MODULE BRAKE-BY-WIRE ET DISPOSITIF DE COMMUTATION

(30) Priority: 18.03.2021 IT 202100006437
(43) Date of publication of application: 24.01.2024
(73) Proprietor: Brembo S.p.A., 24035 Curno (Bergamo) (IT)
(72) Inventor: URSO, Giacomo, 24035 Curno, Bergamo (IT); ODONI, Andrea, 24035 Curno, Bergamo (IT); PESENTI, Luca, 24035 Curno, Bergamo (IT); ARIENTI, Roberto, 24035 Curno, Bergamo (IT)
(74) Representative: Leihkauf, Steffen Falk
(86) International application number: PCT/IB2022/052310
(87) International publication number: WO 2022/195466

(56) References cited:
- WO-A1-2020/208488
- US-A1- 2017 137 009
- US-A1- 2020 122 706

## Description

The present invention relates to a braking system, in particular for electrically operated motorcars, wherein at least one electric traction motor is connected to at least one vehicle axle and used both as a traction motor and as an electromagnetic braking device (braking dynamo) for the recovery of kinetic energy into electrical energy. The invention further relates to a switching device and a BBW (*Brake By Wire*) module for a switchable braking system.

A switchable braking system comprises:
A) a direct (or manual) braking system or circuit with a master brake pump (or master brake pump-piston assembly) actuatable by means of a driver actuating member, in particular a brake pedal or a brake lever, and a direct hydraulic line or circuit, which puts the master brake pump into communication with at least one hydraulic brake of the braking system, e.g., a brake associated with a wheel or an axle of the vehicle,
B) an indirect (or controlled) brake system or circuit with a controlled brake pump (or controlled cylinder-piston assembly) actuatable by means of an electro-mechanical actuator, possibly with a reducer, in particular a screw actuator, and an indirect hydraulic line or circuit, which puts the controlled brake pump into communication with the hydraulic brake of the brake system,
C) a hydraulic compliance chamber, in other words, a system absorbing simulator, which internally delimits a compliance volume expandable against an elastic bias of an elastic reaction member, e.g., an elastic spring,
D) at least one electrically actuatable switching device to switch the braking system between a direct braking configuration and an indirect braking configuration, wherein:
   - in the direct braking configuration, the switching device puts the master brake pump into fluid communication with the hydraulic brake and interrupts the fluid communication between the controlled brake pump and the hydraulic brake, and possibly puts the controlled brake pump into communication with the compliance chamber,
   - in the indirect braking configuration, the switching device puts the controlled brake pump into fluid communication with the hydraulic brake and interrupts the fluid communication between the master brake pump and the hydraulic brake, and puts the master brake pump into communication with the compliance chamber,
E) at least one electronic controller connected with the electromechanical actuator and with the switching device for controlling the switching device and the electromechanical actuator.

When, in the indirect braking configuration, the at least one controlled brake pump is connected to the at least one hydraulic brake of the vehicle and the pressure chamber of the master brake pump is connected to the compliance chamber, the electronic controller adjusts the braking intensity of the hydraulic brake as a function of a dissipative braking target value or target intensity, e.g., defined based on the desired ratio of (hydraulic) dissipative braking and (electromagnetic) regenerative braking. In the practice, a vehicle electronic controller can be provided which determines the dissipative braking target value or target intensity and communicates it to a further dedicated electronic braking controller.

The elastic force of the elastic reaction member of the compliance chamber provides a reaction to the force on the brake pedal to the driver and a pressure value indicative of the braking intensity required by the driver to the master pressure sensor.

When, in the direct braking configuration, the master brake pump is connected to at least one hydraulic brake on the vehicle, and all controlled brake pumps are fluidically separated from the hydraulic brake and, possibly, connected to the compliance chamber, the braking system allows the exclusively (hydraulic) dissipative braking.

Currently, these switchable braking systems for vehicles with regenerative braking and dissipative braking use at least one solenoid valve to directly control switching between direct and indirect braking configurations. To keep the controlled brake pump connected to the hydraulic wheel brakes, the switching solenoid valve continuously draws electrical energy, thus reducing the overall operating range of the system. The solenoid of the valve must be sized to maintain a significant electromagnetic field for a prolonged time, precisely because the solenoid valve must act directly and continuously on the significant load of the hydraulic valve which allows the switching between the two types of braking. This results in the need to use large solenoid valves with expensive, heavy, and bulky solenoids. US2017/137009A1, US2020/122706A1, WO2020/208488A1 describe prior art switchable braking systems.

Therefore, it is the object of the present invention to make available a braking system, in particular for electrically operated motorcars, wherein at least one electric traction motor is connected to at least one vehicle axle and is used both as a traction motor and as an electromagnetic braking device having such features as to reduce the electrical energy consumption and consequently increase the energy range of the vehicle.

It is a further object of the invention to reduce the costs and dimensions of the braking system components, in particular with reference to the switching solenoid valve.

It is a further object of the invention to make available a braking system switchable between direct braking configuration and indirect braking configuration, having innovative switching state preservation features.

These objectives are achieved by means of a switchable braking system according to claim 1 and by means of a BBW module according to claim 8, and by means of a switching module according to claim 14, and by means of a switching device 16 according to claim 15.

The dependent claims relate to advantageous and preferred embodiments.

According to an aspect of the invention, the switching device (16) comprises a hydraulic selector valve (21) switchable to a first switching position and a second switching position and a switching actuation device (28), electrically triggerable, for switching the hydraulic selector valve (21) from the first switching position to the second switching position, wherein the switching device (16) comprises:
**i)** optionally, a switching preservation system (29), which stops the hydraulic selector valve (21) in the second switching position by means of a non-electromagnetic stopping force, chosen from the group consisting of fluid-mechanical forces, elastic forces, mechanical forces, permanent magnetic forces,
   and according to the claimed invention
**ii)** an amplification system (30) comprising:
   - a non-electrical accumulator of potential energy (31), and
   - a switchable connector (32) to disconnect and connect the potential energy accumulator (31) with the hydraulic selector valve (21),
wherein an actuator (33) applies an actuating force to the switchable connector (32) to connect the potential energy accumulator (31) to the hydraulic selector valve (21), wherein said actuating force is less than a switching force applied by the potential energy accumulator (31) onto the hydraulic selector valve (21) to switch it and maintain it in the second switching position, and having the characterizing features of claim 15.

### Switching preservation system

The position preservation system may comprise, for example, an elastic biasing system, a metal spring, a gas spring, or a mechanical snap-action system, a ratchet tooth, a permanent magnet, etc., configured to maintain the set switching position for a prolonged time without significantly drawing electrical energy.

By using a non-electromagnetic switching preservation system in addition to an electrically activated actuation, the switching device can be lighter and smaller in size, consumes less electrical energy, and is less expensive than systems of the prior art.

Furthermore, by virtue of the (in particular non-electromagnetic) switching preservation system, in combination with a specially configured hydraulic selector valve, e.g. a valve having exactly two positions, a precise switching state can be guaranteed without unplanned hybrid positioning and the risk of incorrect positioning of the shutter device, thus guaranteeing more safety of the entire braking system.

### Amplification system

By virtue of the amplification system, in addition to the electrically activated actuation, the electrical energy required to maintain the braking system in the indirect braking configuration is much less than a direct electromagnetic actuation and maintaining of the hydraulic selector valve. As a whole, the switching device can be lighter and smaller in size, consumes less electrical energy, and is less expensive than the systems of the prior art.

The (non-electrical) potential energy accumulator may comprise, for example, a pneumatic pressure accumulator (gas accumulator) or an elastic spring, or a permanent magnet. The corresponding switching connector may comprise a pneumatic selector or ON/OFF valve, a mechanical coupling/decoupling mechanism, a magnetic coupling mechanism, or a displacement mechanism of a permanent magnet.

With particular advantage, the switching position preservation system also implements the amplification system and vice versa.

To better understand the invention and appreciate the advantages thereof, a description of non-limiting exemplary embodiments will be provided below with reference to the drawings, in which:
figures 1A and 1B are diagrammatic views of a switchable braking system according to two embodiments of the invention;
figure 2 shows the braking system in figure 1 in a direct braking configuration (braking applied directly by the driver);
figure 3 shows the braking system in figure 1 in an indirect braking configuration (braking applied indirectly by means of a brake pump controlled by an electronic controller);
figure 4 is a diagrammatic representation of a switchable braking system with a BBW (*Brake By Wire*) module integrated into a vehicle with electric traction according to a first embodiment;
figures 5 to 11 are diagrammatic representations of switchable braking systems with one or more BBW (*Brake By Wire*) modules integrated into vehicles with electric traction according to further embodiments;
figure 12 is an enlarged view of a detail in figure 1;
figures 13 and 14 are diagrammatic views of a switching device of the switchable braking system according to further embodiments.

### Switchable braking system 1

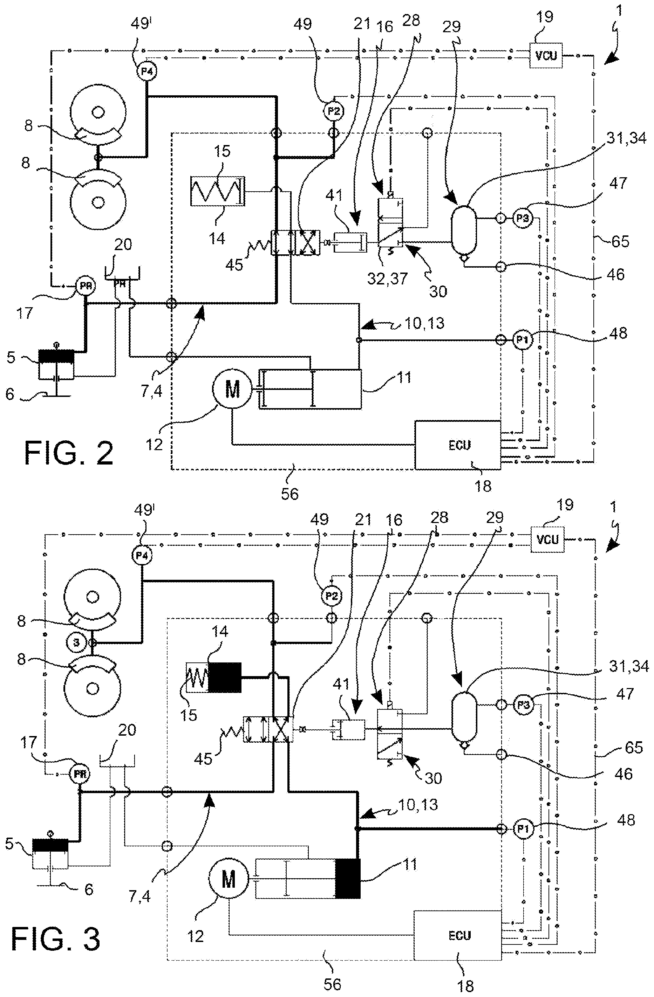

The figures show a braking system 1, in particular for electrically operated motorcars, wherein at least one electric traction motor 2 is connected to at least one axle 3 of the vehicle and used both as a traction motor and as an electromagnetic braking device (braking dynamo) for the recovery of kinetic energy transformed into electrical energy. The braking system 1 comprises:
A) a direct (or manual) braking circuit 4 with a master brake pump 5 (or master cylinder-piston assembly) actuatable by means of a driver actuating member 6, in particular a brake pedal or a brake lever, and a direct hydraulic line 7, which puts the master brake pump 5 into communication with at least one hydraulic brake 8 of the braking system 1, e.g., a brake 8 associated with a wheel 9 or an axle 3 of a wheel 9 of the vehicle, or to an axis 3 of the vehicle
B) an indirect (or controlled) brake circuit 10 with a controlled brake pump 11 (or controlled cylinder-piston assembly) actuatable by means of an electric or electro-mechanical actuator 12, possibly with a reducer, in particular a screw drive, and an indirect hydraulic line 13, which puts the controlled brake pump 11 into communication with the hydraulic brake 8 of the brake system 1,
C) a hydraulic compliance chamber 14, which internally delimits a compliance volume expandable against an elastic bias of an elastic reaction member 15, e.g., an elastic spring,
D) at least one switching device 16 actuatable for switching the braking system 1 between a direct braking configuration (figure 2) and an indirect braking configuration (figure 3), wherein:
   - in the direct braking configuration (figure 2), the switching device 16 puts the master brake pump 5 into fluid communication with the hydraulic brake 8 and interrupts the fluid communication between the controlled brake pump 11 and the hydraulic brake 8, and possibly puts the controlled brake pump 11 into communication with the hydraulic compliance chamber 14,
   - in the indirect braking configuration (figure 3), the switching device 16 puts the controlled brake pump 11 into fluid communication with the hydraulic brake 8 and interrupts the fluid communication between the master brake pump 5 and the hydraulic brake 8, and puts the master brake pump 5 into communication with the hydraulic compliance chamber 15,
E) at least one electronic controller 18 connected to the electric actuator 12 and the switching device 16.

Furthermore, a master pressure sensor 17 may be provided in fluid communication with the master brake pump 5, which provides a driver brake pressure signal, and a caliper pressure sensor 49' in communication with the one or more hydraulic brakes 8 and provides a caliper pressure signal. The master pressure sensor 17 provides the driver brake pressure signal for example to an electronic vehicle control unit 19. Either additionally or alternatively to the master pressure sensor 17, a master pedal stroke sensor may be provided, which provides a similar pedal stroke signal for example to the electronic vehicle control unit 19. The electronic vehicle control unit 19 generates a target pressure value or intensity value for indirect braking according to the pressure signal and/or the pedal stroke signal. The caliper pressure sensor 49' may be connected to the electronic vehicle control unit 19 to check that the braking system 1 delivers an indirect brake pressure consistent with the determined target value provided to the electronic controller 18 of the braking system 1. The caliper pressure sensor 49 provides the/a caliper pressure signal to the electronic controller 18 of the braking system 1 for performing a feedback control by the electronic controller 18.

The electronic vehicle control unit 19 and the electronic controller 18 of the braking system and their functions may be integrated in a single electronic controller or distributed over a plurality of electronic controllers mutually connected in signal communication.

The electronic controller 18 is in signal connection with:
- at least the caliper pressure sensor 49, or
- at least the controlled pressure sensor 48, or
- both caliper pressure sensor 49 and controlled pressure sensor 48,
and the electronic controller 18 controls the switching device 16 according to:
- a SW enabling signal, or
- a HW enabling signal, or
- a SW and HW enabling signal,
and the electronic controller 18 controls the electric actuator 12 of the controlled brake pump 11 according to:
- caliper pressure signal, or
- controlled pressure signal, or
- caliper pressure signal and controlled pressure signal,

and according to a target pressure value / target intensity value for indirect braking received from the vehicle control unit 19. When, in the indirect braking configuration, the at least one controlled brake pump 11 is connected to the at least one hydraulic brake 8 of the vehicle and (the pressure chamber of) the master brake pump 5 is connected to the compliance chamber 14, the electronic controller 18 adjusts the intensity of the braking of the hydraulic brake 8, e.g., as a function of the desired/target (hydraulic) dissipative braking and (electromagnetic) regenerative braking. In practice, the vehicle control unit 19 determines the indirect braking pressure/intensity target value according to the ratio of dissipative braking to electromagnetic regenerative braking and transmits the indirect braking pressure/intensity target value to the electronic controller 18.

In this configuration, the vehicle electronic control unit 19, connected to the electronic controller 18, controls both the electromagnetic braking with electrical energy recovery, through the traction motor 2, and the hydraulic dissipative braking through the hydraulic brake 8. Thus, the vehicle electronic control unit 19 can control the BBW module 56 which, in turn, includes the electronic controller 18, in order to generate a required dissipative hydraulic braking.

The elastic force of the elastic reaction member 15 of the compliance chamber 14 provides a reaction to the force on the driver actuating member 6 (brake pedal) to the driver and a pressure value indicative of the braking intensity required by the driver to the master pressure sensor 17.

When, in the direct braking configuration, the master brake pump 5 is connected to at least one hydraulic brake 8 of the vehicle, and one or all the controlled brake pumps 11 are fluidically separated from the one or more hydraulic brakes 8 and, possibly, connected to the compliance chamber 14, the braking system 1 allows exclusively a (hydraulic) dissipative braking.

According to embodiments, the electric actuator 12 of the controlled brake pump 11 may be, e.g., a DC electric motor, the hydraulic brake 8 may be, e.g., a (hydraulically actuated) disc brake with a fixed caliper or a floating caliper, the braking system 1 may comprise, e.g., one or more hydraulic oil reservoirs 20 connected to the master brake pump 5 and/or the controlled brake pump 11.

The switching device 16 comprises a hydraulic selector valve 21 (e.g., a linear four-way hydraulic valve), having:
- a first opening 22 in communication with the master brake pump 5,
- a second opening 23 in communication with the controlled brake pump 11,
- a third opening 24 in communication with (one or more hydraulic actuators of) the hydraulic brake 8,
- a fourth opening 25 in communication with the hydraulic compliance chamber 14,
- a shutter device 26 forming selective communication passages (e.g. four) 27, 27', 27", 27‴ and being sliding relative to the first 22 and the second 23 openings and relative to the third 24 and the fourth 25 openings, along a switching stroke between:
   - a first switching position (figure 2, corresponding to the direct braking configuration), wherein the first opening 22 is in communication with the third opening 24 and optionally the second opening 23 is in communication with the fourth opening 25 and
   - a second switching position (figure 3, corresponding to the indirect braking configuration), wherein the first opening 22 is in communication with the fourth opening 25 and the second opening is in communication with the third opening 24,
- a switching actuation system 28, electrically triggerable, to make the shutter device 26 slide from the first switching position into the second switching position or vice versa.

According to an embodiment, the hydraulic selector valve 21 (more precisely, the shutter device 26) is permanently elastically biased (through a return spring 45) towards the first switching position and the actuation thereof causes it to move to the second switching position. If the switching actuation system 28 is not electrically powered and in the complete absence of electric power supply to the braking system 1, the shutter device 26 of the hydraulic selector valve 21 moves automatically to the first switching position, corresponding to the direct braking configuration.

Advantageously, the hydraulic selector valve 21 is free of positions with partial overlap of the communication ways, ensuring switching status certainty. Alternatively, the hydraulic selector valve 21 may be configured for intermediate switching positions with partial overlap of the communication passages.

The switching actuation system 28 may comprise, for example, an electromagnetic actuator (solenoid), or a hydraulic actuator, an electric motor, in particular an electric linear motor, or a pneumatic actuator, connected to the electronic controller 18 and controllable by the electronic controller 18 through an electrical control signal.

For further simplification of the entire structure of the switching device 16, the shutter device 26 is linearly slidiable along a linear switching stroke, the switching actuation system 28 comprises a linear actuator and applies a linear translational thrust on the shutter device 26.

### Switching preservation system 29

According to an embodiment of the invention, the switching device 16 further comprises a switching preservation system 29 which biases and/or stops the shutter device 26 at each of the first and second switching positions by a non-electromagnetic stopping force, chosen from, e.g., the group of fluid-mechanical, elastic, mechanical, permanent magnetic forces.

The switching preservation system 29 may comprise, for example, an elastic biasing system, a metal spring, a gas spring, or a mechanical snap system, a ratchet tooth, a permanent magnet, etc., configured to maintain the set switching position for a prolonged time without significantly drawing electrical energy.

By virtue of the switching preservation system 29 with non-electromagnetic stopping force either in addition to or in combination with the electrically activatable or electrically triggerable switching actuation system 28, the switching device 16 can be lighter and smaller in size, consumes less electrical energy and is less expensive than the systems of the prior art.

Furthermore, by virtue of the non-electromagnetic switching preservation system 29 in combination with a specially configured hydraulic selector valve, e.g. a valve having exactly two positions, a precise switching state can be guaranteed without unplanned hybrid positioning and the risk of incorrect positioning of the shutter device 26, thus ensuring greater safety of the entire braking system 1.

According to an aspect of the invention, the switching actuation system 28 and the switching preservation system 29 are configured in *failsafe* mode, i.e., in the event of a complete absence of electrical power supply to the braking system 1, the shutter device 26 of the hydraulic selector valve 21 automatically positions itself in the first switching position corresponding to the direct braking configuration.

### Amplification system 30

According to the invention, either without or in addition to the switching preservation system 29, the switching device 16 comprises an amplification system 30 comprising:
- a non-electrical accumulator of potential energy 31, and
- a switchable connector 32 for disconnecting and connecting the potential energy accumulator 31 from/to the shutter device 26 of the hydraulic selector valve 21,

wherein an actuator 33 of the switching actuation system 28 applies an actuating force to the switchable connector 32 to connect the potential energy accumulator 31 to the shutter device 26,
wherein the actuation force is less than a switching force applied by the potential energy accumulator 31 on the shutter device 26 to move or maintain the shutter device 26 in the second switching position (corresponding to the indirect braking configuration).

By virtue of the amplification system 30, in addition to the electrically actuatable actuator 33, the electrical energy required to maintain the braking system 1 in the indirect braking configuration is much less than a direct electromagnetic actuation and maintenance of the hydraulic selector valve 21.

As a whole, the switching device 16 can be lighter and smaller in size, consumes less electrical energy, and is less expensive than systems of the prior art.

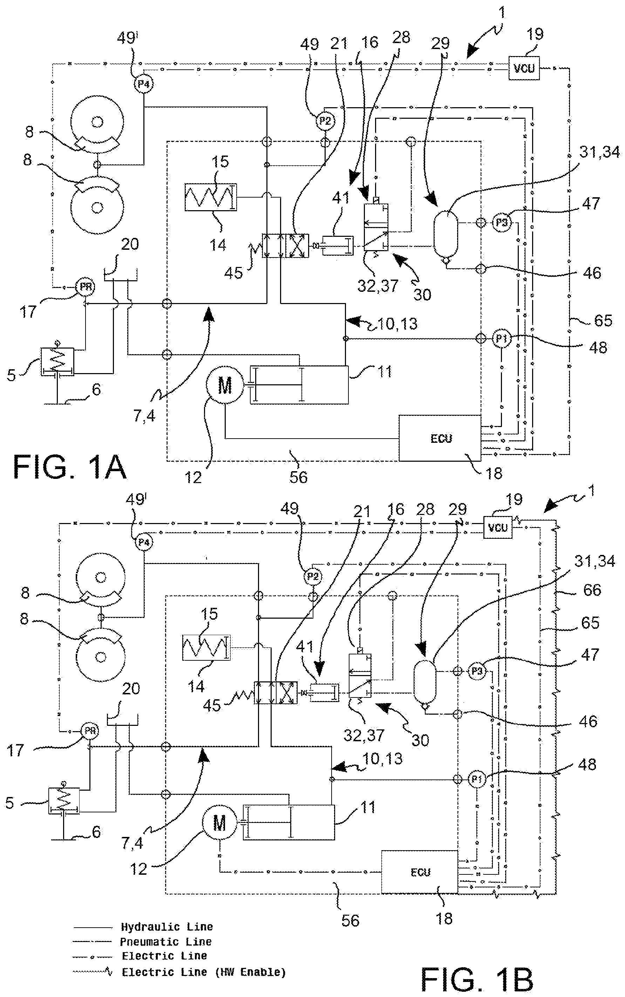

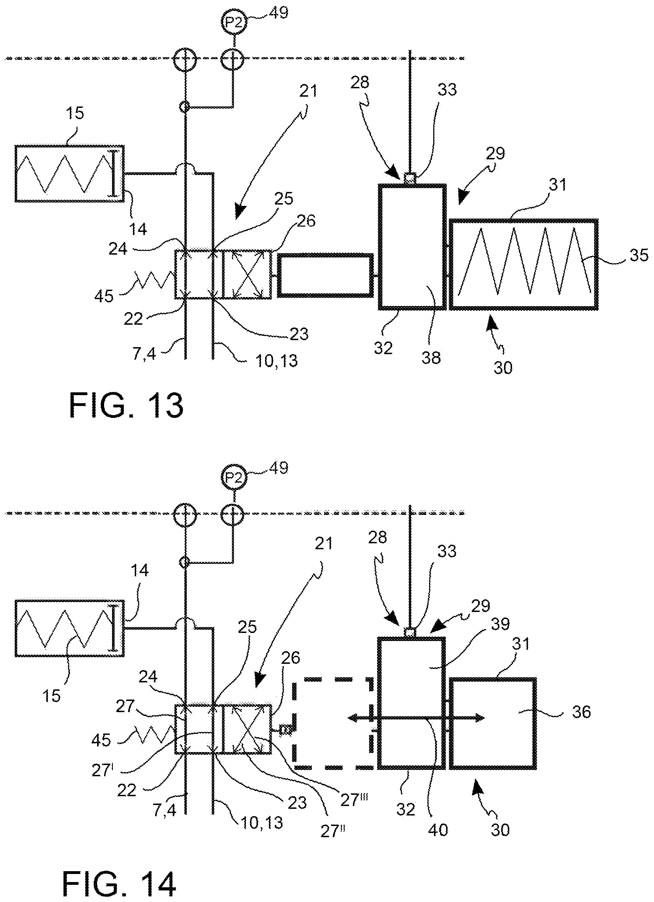

The (non-electrical) potential energy accumulator 31 may comprise, for example, a pneumatic pressure accumulator (gas accumulator 34 (figures 1, 2, 3, 12) or an elastic spring 35 (figure 13) or a permanent magnet 36 (figure 14). The corresponding switching connector 32 may comprise a pneumatic selector or ON/OFF valve 37 (figures 1, 2, 3, 12), or a mechanical coupling/decoupling mechanism 38 (figure 13), or a magnetic coupling mechanism 39, or a displacement mechanism 40 of a permanent magnet 36 (figure 14).

Advantageously, the switching actuation system 28 and the amplification system 30 are configured in *failsafe* mode, i.e., in the event of a complete loss of power supply to the braking system 1, the potential energy accumulator 31 is decoupled or separated from the shutter device 26 of the hydraulic selector valve 21 which automatically positions itself in the first switching position corresponding to the direct braking configuration.

With particular advantage, the switching preservation system 29 also implements the amplification system 30 and vice versa.

### Electro-pneumatic switching device 16

According to a preferred embodiment (figure 1), the switching device 16 or more specifically, the switching preservation system 29 and/or the amplification system 30 may comprise:
- a pneumatic actuator (e.g. cylinder-piston) 41 connected to the shutter device 26 of the hydraulic selector valve 21,
- a compressed gas accumulator 34 acting as said potential energy accumulator 31,
- a pneumatic valve 37 connected between the compressed gas accumulator 34 and the pneumatic actuator 41 and acting as said switchable connector 32.

The pneumatic valve 37 has a gas inlet 43' connected with the gas accumulator 34, a gas outlet 43 connected with the pneumatic actuator 41 and a vent opening 42, and is driven by the electronic controller 18 and electrically operable, e.g., by means of a solenoid, and movable between:
- a closed position (figure 2) in which the gas inlet 43' is closed and the compressed gas accumulator 34 is decoupled from the pneumatic actuator 41 and the gas outlet 43 is in communication with the vent opening 42 (corresponding to the direct braking configuration), and
- an open position (figure 3) in which the gas inlet 43' is in communication with the gas outlet 43 and the compressed gas accumulator 34 is connected in communication with the pneumatic actuator 41 (corresponding to the indirect braking configuration).

When the pneumatic valve 37 stands in the open position, the compressed gas accumulator 34 applies a gas pressure onto the pneumatic actuator 41, which moves the shutter device 26 from the first switching position into the second switching position (figure 3) and continues to push and maintain the shutter device 26 to and in the second switching position by virtue of the fluid-static pressure of the compressed gas.

The switching force generated by the compressed gas pressure is greater, and therefore amplified, compared to the actuation force (applied by the solenoid) of the pneumatic valve 37. Furthermore, this switching force is maintained over time by virtue of the fluid pressure of the compressed gas and does not require any electrical power consumption in itself.

If the pneumatic valve 37 is actively maintained in the open position, the electrical energy required for this purpose is still much less than the electrical energy required for the electrical supply of hydraulic electromagnetic valves of the prior art.

When the pneumatic valve 37 returns from the open position to the closed position, a return spring 45 pushes the shutter device 26 of the hydraulic selector valve 21 to the first switching position, releasing the residual gas pressure through the venting port 42 of the pneumatic valve 37 and connecting the master brake pump 5 to the hydraulic brake 8 and connecting the controlled brake pump 11 to the compliance chamber 14 (direct braking configuration, figure 2).

According to an embodiment, the pneumatic valve 37 is permanently elastically biased (through a return spring 44) towards the closed position and an electric actuation thereof causes the movement to the open position. If the pneumatic valve 37 is not electrically powered and in the complete absence of electrical power of the braking system 1, the pneumatic valve 37 automatically moves to the closed position, and consequently the gas accumulator 34 is decoupled from the gas accumulator 41 and the shutter device 26 of the hydraulic selector valve 21 automatically goes to the first switching position corresponding to the direct braking configuration.

The switching device 16 may further comprise a gas loading socket 46 (with valve) connected to the gas accumulator 34 and a gas pressure sensor 47 in communication with the gas accumulator 34 and in signal connection with the electronic controller 18 (and/or with a vehicle control unit 19) and configured to provide a gas pressure signal.

### Electronic controller 18

The braking system 1 further comprises a controlled pressure sensor 48 in communication with the controlled brake pump 11 and in signal connection with the electronic controller 18 and configured to provide a controlled hydraulic pressure signal.

The braking system 1 further comprises a caliper pressure sensor 49 in communication with the hydraulic brake 8 actuator and in signal connection with the electronic controller 18 and configured to provide a caliper hydraulic pressure signal,

The electronic controller 18 (and/or a vehicle electronic control unit 19 connected to the electronic controller 18) controls the switching actuation system 28 and (the electrical actuation of) the controlled brake pump 11 according to the pressure signals provided by the master pressure sensor 17, the controlled pressure sensor 48, the caliper pressure sensor 49' or the further caliper pressure sensor 49 and, optionally, the gas pressure sensor 46.

According to an advantageous embodiment, the vehicle electronic control unit 19 provides the electronic controller 18 of the BBW module 56 with an indirect braking target value according to the pressure signals provided by the master pressure sensor 17, and the electronic controller 18 controls (the electrical actuation of) the controlled brake pump 11 according to the indirect braking target value and the pressure signals provided by the caliper pressure sensor 49 and/or the further controlled pressure sensor 48.

In other words, the electronic controller 18 controls the switch actuation system 28 and (the electrical actuation of) the controlled brake pump 11 according to a target value of indirect brake pressure/intensity received from the vehicle control unit 19, which determines the indirect brake pressure/intensity target value based on the driver brake pressure signal (from the pressure sensor 17 or similar pedal stroke signal (driver request). The vehicle control unit 19 receives and processes a caliper pressure signal, provided by the pressure sensor 49, for braking system 1 monitoring.

### Safety management

According to embodiments, a unique wired connection, e.g., through CANBUS, between the electronic control unit 19 of the vehicle and the electronic controller 18 (or more generically the BBW module 56 which will be described in more detail below), either for the transmission of control signals of the electronic controller 18 (or more generically the BBW module 56) or for safety management, i.e. for signals for enabling/disabling the power supply and/or enabling the switching actuation system 28, more precisely the pneumatic valve 37.

In this case, both the control signal of the BBW module 56 and a signal for enabling/disabling the power supply and/or for enabling the switching actuation system 28, are transmitted by the same wired connection and received and processed by the same processor and software of the electronic controller 18. Accordingly, in the case of a malfunction of the electronic controller 18 processor and software, the vehicle electronic control unit 19 would have no way to disable the BBW module 56.

To ensure greater independence between the safety management and the control process of the BBW module 56, it is possible and advantageous to equip the braking system (1) with:
- a first wired connection 65, e.g. through CANBUS between the electronic control unit 19 of the vehicle and the electronic controller 18 for transmitting first control signals of the electronic controller 18, which are received and processed by a processor and software of the electronic controller 18,
- a second wired connection 66 between the vehicle electronic control unit 19 and the braking system 1 for signals of enabling/disabling of the electrical power supply and/or signals of enabling of the switching actuation device 28, wherein the second wired connection 66 is separate from the first wired connection 65 and bypasses said electronic controller 18 processor and software.

In the event of a malfunction of the processor and software of the electronic controller 18, the vehicle control unit 19 can disable the BBW module 56, e.g., by means of an independent digital enable signal which allows the electrical power supply to be "turned on" and "turned off".

Alternatively, to ensure greater independence between the safety management and the control process of the BBW module 56, it is possible and advantageous to equip the braking system (1) with:
- a first wired connection 65, e.g. through CANBUS between the electronic control unit 19 of the vehicle and the electronic controller 18 for transmitting first control signals of the electronic controller 18, which are received and processed by a processor and software of the electronic controller 18.
- a second wired connection 66, e.g. again through CANBUS, between the vehicle electronic control unit 19 and the electronic controller 18 for transmitting the electrical power enabling/disabling supply signals and/or enabling signals of the switching actuation device 28, wherein the second wired connection 66 is separate from the first wired connection 65 and bypasses the processor and software of the electronic controller 18 used for controlling the actuator 11, 28, 33 of the indirect braking circuit (10), e.g., using a separate processor.

In the event of a malfunction of the processor and software of the electronic controller 18 used for controlling the actuator 11, 28, 33 of the indirect braking circuit (10), the vehicle control unit 19 can disable the BBW module 56, e.g. by means of an independent enable signal which allows the electrical power supply to be "turned on" and "turned off", through the dedicated line 66 and the dedicated processor.

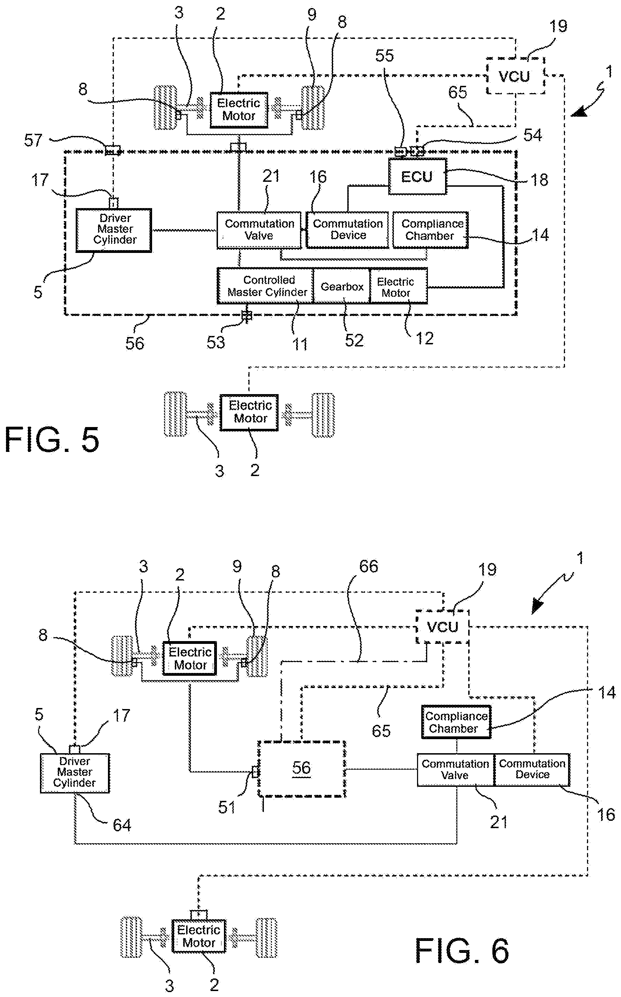

When the switching and switching preservation functions are arranged externally to the BBW module 56, e.g., as in the embodiment shown and described in connection with figure 6, it may be sufficient for the vehicle electronic control unit 19 to provide the power supply directly to the switching actuation system 28.

For the sake of economy of exposition and by way of example, only figures 1B, 4, 6 also show the aforementioned second wired connection 66, but all of the described embodiments may be implemented with only the single wired connection 65 or with the first wired connection 65 and the second wired connection 66.

### BBW (Brake By Wire) module 56

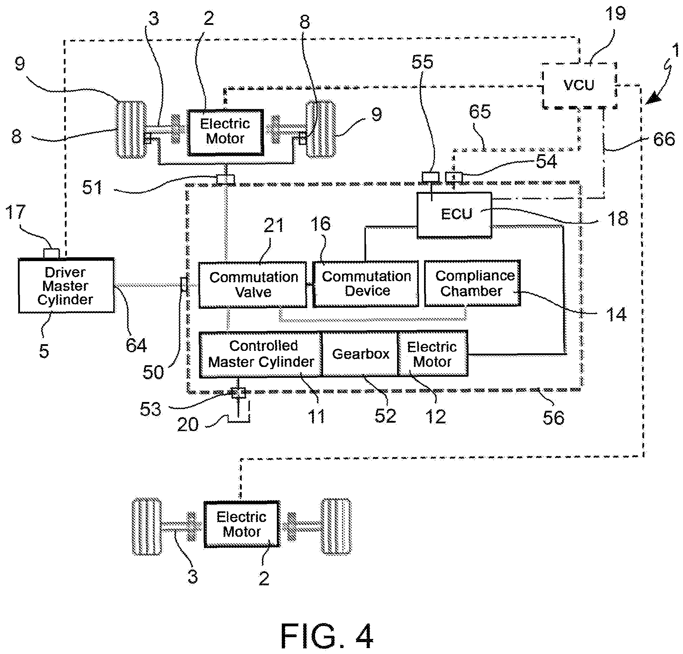

According to an embodiment **(****figures 1****,** 4),
the direct hydraulic line 7 with a master hydraulic port 50 for the connection to the master brake pump 5 and a brake hydraulic port 51 for the connection to the hydraulic brake 8,
the controlled brake pump 11 with the electric actuator 12 and possibly with the reducer 52 with a hydraulic reservoir port 53 for the connection to the hydraulic reservoir 20,
the indirect hydraulic line 13,
the hydraulic compliance chamber 14,
the switching device 16,
the electronic controller 18,
one or more signal interface systems 54, 65, 66 (wireless or wired, e.g., CANBUS communication interface) for the connection with the vehicle electronic control unit 19, as well as a power supply connector 55,
are integrated into a single BBW (Brake By Wire) 56 module which is manufactured and marketed separately and installed in the vehicle. In this case, the vehicle control unit 19 is in signal connection with and controls the one or more traction motors 2, for electromagnetic braking of the front and/or rear wheels of the vehicle, and in signal connection with the master pressure sensor 17 and/or with the master pedal stroke sensor, and with the electronic controller 18 to control the (hydraulic) dissipative braking by means of the one or more hydraulic brakes 8.

According to a further embodiment **(****figure** 5), the BBW module 56 further includes the master brake pump 5 and optionally the master pressure sensor 17 or the master pedal stroke sensor, as well as optionally a master signal connector 57 for a signal connection of the master pressure sensor 17 with the vehicle control unit 19.

Also in this case, the vehicle control unit 19 is in signal connection with and controls one or more traction motors 2, for electromagnetic braking of the front and/or rear wheels of the vehicle, and in signal connection with the master pressure sensor 17 and with the electronic controller 18 to control the (hydraulic) dissipative braking by means of the one or more hydraulic brakes 8.

According to a further embodiment **(****figure** 6), the BBW module 56 includes the controlled brake pump 11 with the electric actuator 12 and, possibly the reducer 52, with a hydraulic reservoir port 53 for connection with the hydraulic reservoir 20, the electronic controller 18 with a signal connection interface 54, 65 (wireless or wired, e.g. CANBUS communication interface) for connection with the electronic control unit 19 of the vehicle, as well as a power supply connector 55, and possibly a second independent wired connection 66 for electrical power enabling/disabling signals, while the entire switching device 16 and the master brake pump 5 are also located as module/s externally to the BBW module 56.

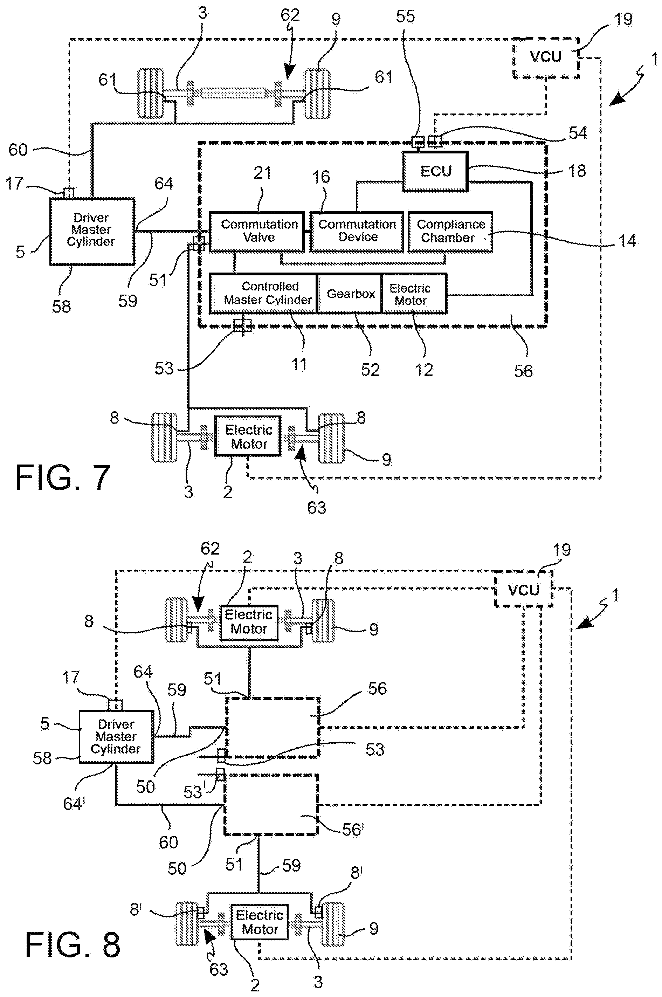

According to a further embodiment **(****figure** 7), the BBW module 56 is configured as described with reference to **figure 4****,** but the master brake pump 5 comprises a piston-cylinder assembly with multiple outlets 58, in particular with a first outlet hydraulic line 59 and a second outlet hydraulic line 60, e.g., a single piston-cylinder pump with two or more hydraulic outlets, a single pump with two cylinder-piston assemblies (tandem), two piston-cylinder pumps connected by means of a rocker arm. The first hydraulic line 59 is connectable to the master hydraulic port 50 of the BBW module 56, and the second hydraulic line 60 is connectable or directly connected to one or more further hydraulic brakes 61 of the vehicle, so that it is possible, for example, to make a first group of wheels or a first axle 62 of the vehicle with only direct hydraulic braking and a second group of wheels or a second axle 63 of the vehicle with switchable direct or indirect hydraulic braking.

According to a further embodiment **(****figure 8****),** the vehicle comprises two of said separate BBW modules 56, 56' configured as described with reference to **figure 4****,** and the master brake pump 5 comprises a piston-cylinder assembly 58 with multiple outlets (e.g., configured as described in the preceding paragraph) having a first hydraulic line 59 connectable to the master hydraulic port 50 of the first BBW module 56 and having a second hydraulic line 60 connectable to the master hydraulic port 50 of the second BBW module 56', and the hydraulic brake ports 51 of the first and second BBW modules 56, 56' are connected to different hydraulic brakes 8, 8' or groups of hydraulic brakes 8, 8', e.g., associated with a first group of wheels or a first axle 62 of the vehicle and to a second group of wheels or a second axle 63 of the vehicle, both having switchable direct or indirect hydraulic braking.

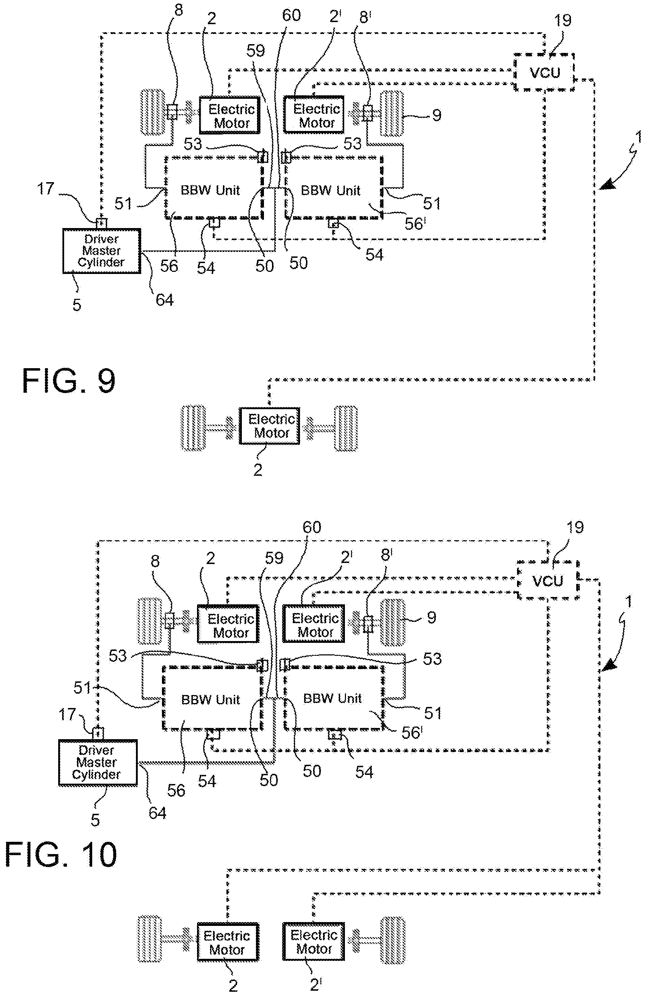

According to a further embodiment **(****figure 9, 10****),** the vehicle comprises two of said separate BBW modules 56, 56' configured as described with reference to **figure 4****,** and the master brake pump 5 comprises a single hydraulic outlet 64 bifurcated in a first hydraulic line 59 connectable to the master hydraulic port 50 of the first BBW module 56 and having a second hydraulic line 60 connectable to the master hydraulic port 50 of the second BBW module 56', and the hydraulic brake ports 51 of the first and second BBW modules 56, 56' are independently connected to two different hydraulic brakes 8, 8' or groups of hydraulic brakes 8, 8', e.g., associated with a first group of wheels or a second wheel of the same axle and independently controllable with switchable direct or indirect hydraulic braking.

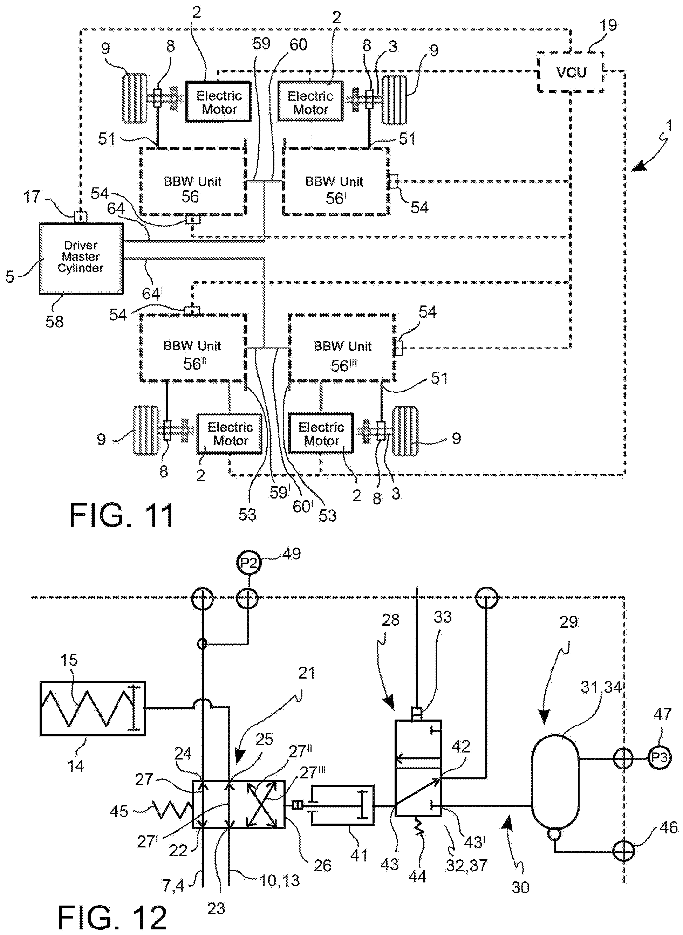

According to a further embodiment **(****figure 11****),** the vehicle comprises four of said separate BBW modules 56, 56', 56", 56‴, configured as described with reference to **figure 4****,** and the master brake pump 5 comprises a piston-cylinder assembly with multiple outlets 58 (e.g., configured as described in the preceding paragraph) with two separate hydraulic outlets 64, 64', each of which is bifurcated into a first hydraulic line (59, 59') and a second hydraulic line (60, 60'), and the four hydraulic lines (59, 60, 59', 60') are connectable to the master hydraulic ports (50) of the four BBW modules (56, 56', 56", 56‴), and the hydraulic brake ports (51) of the four BBW modules (56, 56', 56", 56‴) are independently connectable to four hydraulic brakes (8, 8', 8", 8"') or four different and independently controllable hydraulic brake groups.

The vehicle control unit 19 may control a single traction motor 2 as an electromagnetic brake (with energy recovery) for only one or both axles of the vehicle, or two separate traction motors 2, 2' as separate electromagnetic brakes (with energy recovery) for only one or both axles of the vehicle (figures 9, **10****,** **11****).**

According to an example of operation of the braking system 1, in the event of an abnormal power supply or an abnormal operation of the indirect brake circuit 10, detected by means of the electronic controller 18 of the braking system 1 and/or by means of the vehicle control unit 19, the braking system 1 switches to the direct braking configuration, wherein the hydraulic selector valve 21 is mechanically maintained in the first switching position thereby hydraulically connecting the master brake pump 5 to the hydraulic brake caliper 8 and the controlled brake pump 11 with the hydraulic compliance chamber 14.

In the event of a planned power supply (i.e., planned for proper operation of the braking system 1) and in absence of malfunctions in the operation of the indirect brake circuit 10, detected by the electronic controller 18 of the braking system 1 and/or by the vehicle control unit 19, the braking system 1 switches to the indirect braking configuration, wherein the hydraulic selector valve 21 is pneumatically pushed into the second switching position, thereby hydraulically connecting the controlled brake pump 11 to the hydraulic brake caliper 8 and the master brake pump 5 with the hydraulic compliance chamber 14.

## Claims

1. A braking system (1), in particular for electrically operated motor vehicles, wherein at least one electric traction motor (2) is connected to at least one axle (3) of the vehicle and used both as a traction motor and as an electromagnetic braking device with energy recovery, the braking system (1) comprising:
A) a direct braking circuit (4) with a master brake pump (5) actuatable by means of a driver actuating member (6) and a direct hydraulic line (7), which puts the master brake pump (5) into communication with at least one hydraulic brake (8) of the braking system (1),
B) an indirect brake circuit (10) with an electrically actuatable controlled brake pump (11) and an indirect hydraulic line (13), which puts the controlled brake pump (11) into communication with the hydraulic brake (8) of the brake system (1),
C) a hydraulic compliance chamber (14), which internally delimits a compliance volume expandable against an elastic bias of an elastic reaction member (15),
D) at least one switching device (16) actuatable to switch the braking system (1) between a direct braking configuration and an indirect braking configuration, wherein:
- in the direct braking configuration, the switching device (16) puts the master brake pump (5) into fluid communication with the hydraulic brake (8) and interrupts the fluid communication between the controlled brake pump (11) and the hydraulic brake (8),
- in the indirect braking configuration, the switching device (16) puts the controlled brake pump (11) into fluid communication with the hydraulic brake (8) and interrupts the fluid communication between the master brake pump (5) and the hydraulic brake (8) and puts the master brake pump (5) into communication with the hydraulic compliance chamber (15),
E) at least one electronic controller (18) connected with the controlled brake pump (11) and with the switching device (16),
wherein the switching device (16) comprises a hydraulic selector valve (21) having:
- a first opening (22) in communication with the master brake pump (5), a second opening (23) in communication with the controlled brake pump (11), a third opening (24) in communication with the hydraulic brake (8) and a fourth opening (25) in communication with the hydraulic compliance chamber (14),
- a shutter device (26) forming selective communication passages (27, 27', 27", 27"') and being sliding relative to the first (22) and the second (23) openings and relative to the third (24) and the fourth (25) openings, along a switching stroke between:
- a first switching position corresponding to the direct braking configuration, wherein the master brake pump (5) is in communication with the hydraulic brake (8) and the controlled brake pump (11) is in communication with the compliance chamber (14) and,
- a second switching position corresponding to the indirect braking configuration, wherein the controlled brake pump (11) is in connection with the hydraulic brake (8) and the master brake pump (5) is in connection with the compliance chamber (14),
- a switching actuation system (28), electrically triggerable, to make the shutter device (26) slide from the first switching position into the second switching position, wherein the switching device (16) comprises an amplification system (30) comprising:
- an accumulator of non-electrical potential energy (31), and
- a switchable connector (32) for disconnecting and connecting the potential energy accumulator (31) from/to the shutter device (26) of the hydraulic selector valve (21), wherein an actuator (33) of the switching actuation system (28) applies an actuating force to the switchable connector (32) to connect the potential energy accumulator (31) to the shutter device (26), and said actuating force is less than a switching force applied by the potential energy accumulator (31) onto the shutter device (26) to move or maintain the shutter device (26) in the second switching position,
**characterized in that** said accumulator (31) of non-electrical potential energy comprises either:
- a compressed gas accumulator (34), an elastic spring (35), a permanent magnet (36), and the corresponding switchable connector (32) comprises either:
- a pneumatic selector or ON/OFF valve (37), a mechanical coupling/decoupling mechanism (38), a magnetic coupling mechanism (39), or a displacement mechanism (40) of a permanent magnet (36).

2. The braking system (1) according to claim 1, wherein the switching device (16) comprises a switching preservation system (29), which stops the shutter device (26) in the second switching position by means of a non-electromagnetic stopping force, chosen from the group consisting of fluid-mechanical forces, elastic forces, mechanical forces, permanent magnetic forces,
wherein:
- the switching preservation system (29) also forms the amplification system (30),
- in case of complete absence of power supply to the braking system (1), the hydraulic selector valve (21) automatically moves mechanically to the first switching position, corresponding to the direct braking configuration.

3. The braking system (1) according to claim 1 or 2, wherein the shutter device (26) is linearly slidable along a linear switching stroke and permanently elastically biased towards the first switching position, and the switching actuation system (28) includes a linear actuator and is configured to apply a linear translatory thrust on the shutter device (26) towards the respective first and/or second switching positions.

4. The braking system (1) according to any one of the preceding claims, wherein the switching device (16) comprises:
- a pneumatic actuator (41) connected to the shutter device (26) of the hydraulic selector valve (21),
- a compressed gas accumulator (34),
- a pneumatic valve (37) connected between the compressed gas accumulator (34) and the pneumatic actuator (41),
wherein the pneumatic valve (37) is controlled by the electronic controller (18) and electrically actuatable, and movable between:
- a closed position, wherein the compressed gas accumulator (34) is decoupled from the pneumatic actuator (41) and the pneumatic actuator (41) is connected to a vent opening (42), and
- an open position, wherein the compressed gas accumulator (34) is connected in communication with the pneumatic actuator (41),
wherein:
with the pneumatic valve (37) in the open position, the compressed gas accumulator (34) applies a gas pressure onto the pneumatic actuator (41), which moves the shutter device (26) from the first switching position into the second switching position and continues to push and hold the shutter device (26) in the second switching position by virtue of the fluidic pressure of the compressed gas,
when the pneumatic valve (37) returns to the closed position, a return spring (45) pushes the shutter device (26) of the hydraulic selector valve (21) to the first switching position, thereby releasing the residual gas pressure through the venting port (42) and connecting the brake master brake pump (5) to the hydraulic brake (8) and connecting the controlled brake pump (11) to the compliance chamber (14).

5. The braking system (1) according to claim 4, wherein:
- the pneumatic valve (37) is permanently elastically biased towards the closed position and its electrical actuation causes the displacement to the open position, and
- if the pneumatic valve (37) is not electrically powered, the pneumatic valve (37) automatically moves mechanically to the closed position, decoupling the gas accumulator (34) from the pneumatic actuator (41) so that the hydraulic selector valve (21) automatically goes to the first switching position corresponding to the direct braking configuration.

6. The braking system (1) according to claim 4 or 5, wherein the switching device (16) comprises a gas loading socket (46) connected to the gas accumulator (37) and a gas pressure sensor (47) in communication with the gas accumulator (37) and in signal connection with the electronic controller (18) and/or a vehicle control unit (19) and configured to provide a gas pressure signal.

7. The braking system (1) according to any one of claims 4 to 6, comprising a caliper pressure sensor (49', 49) which is in communication with the hydraulic brake (8) and provides a caliper pressure signal, and/or a commanded pressure sensor (48) which is in communication with the controlled brake pump (11) and configured to provide a commanded pressure signal,
wherein the electronic controller (18) controls the switching device (16) and the controlled brake pump (11) according to the caliper pressure signal and/or the controlled pressure signal.

8. A brake by wire BBW module (56, 56', 56", 56‴) for the braking system (1) according to any one of the preceding claims, individually manufacturable and installable in said braking system (1), said BBW module (56, 56', 56", 56‴) comprising:
- said direct hydraulic line (7) with a master hydraulic port (50) for the connection to the master brake pump (5) and a brake hydraulic port (51) for the connection to the hydraulic brake (8),
- said controlled brake pump (11) with an electric drive (12) and with a hydraulic reservoir port (53) for the connection to the hydraulic reservoir (20),
- said indirect hydraulic line (13),
- said hydraulic compliance chamber (14),
- said switching device (16),
- said electronic controller (18),
- at least one signal connection interface (54, 65, 66) for a connection to an electronic control unit (19) of the vehicle,
- an electrcial power supply connector (55).

9. The BBW module (56, 56', 56", 56") according to claim 8, wherein the BBW module (56, 56', 56", 56") further includes the master brake pump (5) and the master pressure sensor (17), and a master signal connector (57) for a signal connection of the master pressure sensor (17) to a control unit (19) of the vehicle.

10. The braking system (1) **according to any one of claims 1 to 7,** comprising a BBW module (56) **according to claim 8,** wherein the master brake pump (5) comprises a multiple output piston cylinder assembly (58) having a first hydraulic line (59) connectable to the master hydraulic port (50) of the BBW module (56) and having a second hydraulic line (60) directly connected to one or more further hydraulic brakes (61) of the vehicle.

11. The braking system (1) **according to any one of claims 1 to 7,** comprising a first brake by wire BBW module (56) **according to claim** 8 and a second brake by wire BBW module (56') **according to claim 8,** wherein the master brake pump (5) comprises a multiple output piston cylinder assembly (58) with a first hydraulic line (59) connectable to the master hydraulic port (50) of the first BBW module (56) and with a second hydraulic line (60) connectable to the master hydraulic port (50) of the second BBW module (56'), and the brake hydraulic ports (51) of the first and second BBW modules (56, 56') are connectable to different and independently controllable hydraulic brakes (8, 8') or hydraulic brake assemblies (8, 8').

12. The braking system (1) **according to any one of claims 1 to 7,** comprising a first brake by wire BBW module (56) **according to claim** 8 and a second brake by wire BBW module (56') **according to claim 8,** wherein the master brake pump (5) comprises a single hydraulic outlet (64) bifurcated into a first hydraulic line (59) connectable to the master hydraulic port (50) of the first BBW module (56) and a second hydraulic line (60) connectable to the master hydraulic port (50) of the second BBW module (56'), and the brake hydraulic ports (51) of the first and second BBW modules (56, 56') are independently connectable to two different and independently controllable hydraulic brakes (8, 8') or hydraulic brake assemblies (8, 8').

13. The braking system (1) **according to any one of claims 1 to 7,** comprising four brake by wire BBW modules (56, 56', 56", 56‴) **according to claim 8,** wherein the master brake pump (5) comprises a piston cylinder assembly with two separate hydraulic outlets (64, 64'), each of which is bifurcated into a first hydraulic line (59, 59') and a second hydraulic line (60, 60'), and the four hydraulic lines (59, 60, 59', 60') are connectable to the master hydraulic ports (50) of the four BBW modules (56, 56', 56", 56"'), and the hydraulic brake ports (51) of the four BBW modules (56, 56', 56", 56‴) are independently connectable to four hydraulic brakes (8, 8', 8", 8"') or four different and independently controllable hydraulic brake groups.

14. A switching module for the braking system (1) according to any one of claims from 1 to 7, individually manufacturable and installable in said braking system (1), said switching module comprising said switching device (16).

15. A switching device (16) for a switchable braking system (1), comprising a hydraulic selector valve (21) switchable to a first switching position and a second switching position, a switching actuation device (28), electrically triggerable, for switching the hydraulic selector valve (21) from the first switching position to the second switching position,
wherein the switching device (16) comprises an amplification system (30) comprising:
- a non-electrical accumulator of potential energy (31), and
- a switchable connector (32) to disconnect and connect the potential energy accumulator (31) with the hydraulic selector valve (21),
wherein an actuator (33) applies an actuating force to the switchable connector (32) to connect the potential energy accumulator (31) to the hydraulic selector valve (21), wherein said actuating force is less than a switching force applied by the potential energy accumulator (31) onto the hydraulic selector valve (21) to switch it and maintain it in the second switching position,
**characterized in that** said non-electrical accumulator (31) of potential energy comprises either:
- a compressed gas accumulator 34, an elastic spring (35), a permanent magnet (36), and the corresponding switchable connector (32) comprises either:
- a pneumatic selector or ON/OFF valve (37), a mechanical coupling/decoupling mechanism (38), a magnetic coupling mechanism (39), or a displacement mechanism (40) of a permanent magnet (36).

16. The braking system (1) according to one of claims from 1 to 7, comprising:
- a first wired connection (65) between the electronic control unit (19) of the vehicle and the electronic controller (18) for transmitting first control signals of the electronic controller (18), which are received and processed by a processor and software of the electronic controller (18),
- a second wired connection (66) between the vehicle electronic control unit (19) and the braking system (1) for signals of enabling/disabling of the electrical power supply and/or signals of enabling of the switching actuation device (28), wherein the second wired connection (66) is separate from the first wired connection (65) and bypasses said electronic controller processor and software (18).

## Patentansprüche

1. Bremssystem (1), insbesondere für elektrisch betriebene Kraftfahrzeuge, wobei mindestens ein elektrischer Antriebsmotor (2) mit mindestens einer Achse (3) des Fahrzeugs verbunden ist und sowohl als Antriebsmotor als auch als elektromagnetische Bremsvorrichtung mit Energierückgewinnung verwendet wird, das Bremssystem (1) umfassend:
A) eine direkte Bremsschaltung (4) mit einer Hauptbremspumpe (5), die mittels eines Treiberbetätigungselements (6) betätigt werden kann, und einer direkten Hydraulikleitung (7), die die Hauptbremspumpe (5) mit mindestens einer hydraulischen Bremse (8) des Bremssystems (1) in Verbindung setzt,
B) eine indirekte Bremsschaltung (10) mit einer elektrisch betätigbaren gesteuerten Bremspumpe (11) und einer indirekten Hydraulikleitung (13), die die gesteuerte Bremspumpe (11) mit der hydraulischen Bremse (8) des Bremssystems (1) in Verbindung setzt,
C) eine hydraulische Konformitätskammer (14), die innen ein Konformitätsvolumen begrenzt, das gegen eine elastische Vorspannung eines elastischen Rückstellelements (15) ausdehnbar ist,
D) mindestens eine Schaltvorrichtung (16), die betätigt werden kann, um das Bremssystem (1) zwischen einer direkten Bremskonfiguration und einer indirekten Bremskonfiguration umzuschalten, wobei:
- in der direkten Bremskonfiguration die Schaltvorrichtung (16) die Hauptbremspumpe (5) in Fluidverbindung mit der hydraulischen Bremse (8) setzt und die hydraulische Verbindung zwischen der gesteuerten Bremspumpe (11) und der hydraulischen Bremse (8) unterbricht,
- in der indirekten Bremskonfiguration die Schaltvorrichtung (16) die gesteuerte Bremspumpe (11) in Fluidverbindung mit der hydraulischen Bremse (8) setzt und die Fluidverbindung zwischen der Hauptbremspumpe (5) und der hydraulischen Bremse (8) unterbricht und die Hauptbremspumpe (5) in Verbindung mit der hydraulischen Konformitätskammer (14) setzt,
E) mindestens eine elektronische Steuereinheit (18), die mit der gesteuerten Bremspumpe (11) und mit der Schaltvorrichtung (16) verbunden ist,
wobei die Schaltvorrichtung (16) ein hydraulisches Auswahlventil (21) umfasst, das aufweist:
eine erste Öffnung (22), die mit der Hauptbremspumpe (5) in Verbindung steht, eine zweite Öffnung (23), die mit der gesteuerten Bremspumpe (11) in Verbindung steht, eine dritte Öffnung (24), die mit der hydraulischen Bremse (8) in Verbindung steht, und eine vierte Öffnung (25), die mit der hydraulischen Konformitätskammer (14) in Verbindung steht,
eine Verschlussvorrichtung (26), die selektive Kommunikationsdurchgänge (27, 27', 27", 27"') bildet und in Bezug auf die erste (22) und zweite (23) Öffnung sowie in Bezug auf die dritte (24) und vierte (25) Öffnung entlang einer Schaltstrecke zwischen:
- einer ersten Schaltstellung, die der direkten Bremskonfiguration entspricht, wobei die Hauptbremspumpe (5) mit der hydraulischen Bremse (8) in Verbindung steht und die gesteuerte Bremspumpe (11) mit der Konformitätskammer (14) in Verbindung steht, und,
- einer zweiten Schaltstellung, die der indirekten Bremskonfiguration entspricht, wobei die gesteuerte Bremspumpe (11) mit der hydraulischen Bremse (8) in Verbindung steht und die Hauptbremspumpe (5) mit der Konformitätskammer (14) in Verbindung steht,
- ein Schaltbetätigungssystem (28), das elektrisch auslösbar ist, um die Verschlussvorrichtung (26) von der ersten Schaltstellung in die zweite Schaltstellung zu verschieben,
wobei die Schaltvorrichtung (16) ein Verstärkungssystem (30) umfasst, umfassend:
- einen Speicher von nicht-elektrischer Energie (31), und
- einen schaltbaren Verbinder (32) zum Trennen oder zum Verbinden des potentiellen Energiespeichers (31) mit/ von der Verschlussvorrichtung (26) des hydraulischen Auswahlventils (21), wobei ein Aktuator (33) des Schaltbetätigungssystems (28) eine Betätigungskraft auf den schaltbaren Verbinder (32) ausübt, um den potentiellen Energiespeicher (31) mit der Verschlussvorrichtung (26) zu verbinden, und wobei diese Betätigungskraft kleiner als eine Schaltkraft ist, die von dem potentiellen Energiespeicher (31) auf die Verschlussvorrichtung (26) ausgeübt wird, um die Verschlussvorrichtung (26) in der zweiten Schaltstellung zu bewegen oder zu halten,
**dadurch gekennzeichnet, dass** der Speicher (31) von nicht-elektrischer potentieller Energie umfasst:
- einen komprimierten Gasspeicher (34), eine Sprungfeder (35), einen Permanentmagneten (36), und der entsprechende schaltbare Verbinder (32) umfasst:
- ein pneumatischer Wähler oder ON/OFF-Ventil (37), ein mechanischer Kupplungs/Entkupplungsmechanismus (38), ein magnetischer Kupplungsmechanismus (39) oder ein Verschiebemechanismus (40) für einen Permanentmagneten (36).

2. Bremssystem (1) nach Anspruch 1, wobei die Schaltvorrichtung (16) ein Schaltschutzsystem (29) umfasst, das die Verschlussvorrichtung (26) in der zweiten Schaltstellung mittels einer nicht-elektromagnetischen Haltekraft hält, die aus der Gruppe bestehend aus fluidmechanischen Kräften, elastischen Kräften, mechanischen Kräften, permanentmagnetischen Kräften ausgewählt wird,
wobei:
- das Schaltschutzsystem (29) auch das Verstärkungssystem (30) bildet,
- bei vollständiger Abwesenheit der Stromversorgung des Bremssystems (1) das hydraulische Auswahlventil (21) sich automatisch mechanisch in die erste Schaltstellung bewegt, die der direkten Bremskonfiguration entspricht.

3. Bremssystem (1) nach Anspruch 1 oder 2, wobei die Verschlussvorrichtung (26) entlang einer linearen Schaltstrecke linear verschiebbar ist und dauerhaft elastisch zu der ersten Schaltstellung vorgespannt wird, und wobei das Schaltbetätigungssystem (28) einen Linearantrieb umfasst und dazu konfiguriert ist, einen linearen Verschiebungsschub auf die Verschlussvorrichtung (26) zu der jeweiligen ersten und/oder zweiten Schaltstellung auszuüben.

4. Bremssystem (1) nach einem der vorhergehenden Ansprüche, wobei die Schaltvorrichtung (16) umfasst:
- einen pneumatischen Aktuator (41), der mit der Verschlussvorrichtung (26) des hydraulischen Auswahlventils (21) verbunden ist,
- einen komprimierten Gasspeicher (34),
- ein pneumatisches Ventil (37), das zwischen dem komprimierten Gasspeicher (34) und dem pneumatischen Aktuator (41) verbunden ist,
wobei das pneumatische Ventil (37) von der elektronischen Steuereinheit (18) gesteuert wird und elektrisch betätigt werden kann und zwischen folgenden Positionen beweglich ist:
- eine geschlossene Stellung, in der der komprimierte Gasspeicher (34) von dem pneumatischen Aktuator (41) entkoppelt wird und der pneumatische Aktuator (41) mit einer Entlüftungsöffnung (42) verbunden ist, und
- eine offene Stellung, in der der komprimierte Gasspeicher (34) in Kommunikation mit dem pneumatischen Aktuator (41) verbunden ist,
wobei:
mit dem pneumatischem Ventil (37) in der offenen Stellung, der komprimierte Gasspeicher (34) einen Gasdruck auf den pneumatischen Aktuator (41) ausübt, der die Verschlussvorrichtung (26) von der ersten Schaltstellung in die zweite Schaltstellung bewegt und noch die Verschlussvorrichtung (26) in der zweiten Schaltstellung aufgrund des Fluiddrucks des komprimierten Gases drückt und hält,
wenn das pneumatische Ventil (37) wieder in die geschlossene Stellung zurückkehrt, eine Rückstellfeder (45) die Verschlussvorrichtung (26) des hydraulischen Auswahlventils (21) in die erste Schaltstellung drückt, sodass der Restgasdruck durch die Entlüftungsöffnung (42) freigesetzt wird und die Hauptbremspumpe (5) mit der hydraulischen Bremse (8) verbunden wird und die gesteuerte Bremspumpe (11) mit der Konformitätskammer (14) verbunden wird.

5. Bremssystem (1) nach Anspruch 4, wobei:
- das pneumatische Ventil (37) dauerhaft elastisch zu der geschlossenen Stellung gedrückt wird und seine elektrische Betätigung die Verschiebung in die offene Stellung bewirkt, und
- wenn das pneumatische Ventil (37) nicht elektrisch versorgt wird, das pneumatische Ventil (37) sich automatisch mechanisch in die geschlossene Stellung bewegt, indem es den Gasspeicher (34) von dem pneumatischen Aktuator (41) trennt, sodass das hydraulische Auswahlventil (21) automatisch in die erste Schaltstellung übergeht, die der direkten Bremskonfiguration entspricht.

6. Bremssystem (1) nach Anspruch 4 oder 5, wobei die Schaltvorrichtung (16) eine Gasladungsbuchse (46) umfasst, die mit dem Gasspeicher (37) verbunden ist, und einen Gasdrucksensor (47), der mit dem Gasspeicher (37) in Verbindung steht und in Signalverbindung mit der elektronischen Steuereinheit (18) und/oder einer Fahrzeugsteuereinheit (19) steht und dazu konfiguriert ist, ein Gasdrucksignal zu liefern.

7. Bremssystem (1) nach einem der Ansprüche 4 bis 6, umfassend einen Bremssatteldrucksensor (49', 49), der mit der hydraulischen Bremse (8) in Verbindung steht und ein Bremssatteldrucksignal liefert, und/oder einen gesteuerten Drucksensor (48), der mit der gesteuerten Bremspumpe (11) in Verbindung steht und dazu konfiguriert ist, ein gesteuertes Drucksignal zu liefern,
wobei die elektronische Steuereinheit (18) die Schaltvorrichtung (16) und die gesteuerte Bremspumpe (11) nach dem Bremssatteldrucksignal und/oder dem gesteuerten Drucksignal steuert.

8. Brake By Wire BBW Modul (56, 56', 56", 56‴) für das Bremssystem (1) nach einem der vorhergehenden Ansprüche, das einzeln hergestellt werden kann und in das Bremssystem (1) installiert werden kann, das BBW-Modul (56, 56', 56", 56‴) umfassend:
- die direkte Hydraulikleitung (7) mit einem hydraulischen Hauptanschluss (50) zur Verbindung mit der Hauptbremspumpe (5) und einem hydraulischen Bremsanschluss (51) zur Verbindung mit der hydraulischen Bremse (8),
- die gesteuerte Bremspumpe (11) mit einem elektrischen Antrieb (12) und mit einem hydraulischen Behälteranschluss (53) zur Verbindung mit dem hydraulischen Behälter (20),
- die indirekte Hydraulikleitung (13),
- die hydraulische Konformitätskammer (14),
- die Schaltvorrichtung (16),
- die elektronische Steuereinheit (18),
- mindestens eine Signalverbindungsschnittstelle (54, 65, 66) zur Verbindung mit einer elektronischen Steuereinheit (19) des Fahrzeuges,
- einen elektrischen Versorgungsverbinder (55).

9. BBW-Modul (56, 56', 56", 56"') nach Anspruch 8, wobei das BBW-Modul (56, 56', 56", 56‴) ferner die Hauptbremspumpe (5) und den Hauptdrucksensor (17) umfasst, sowie einen Hauptsignalverbinder (57) für eine Signalverbindung des Hauptdrucksensors (17) mit einer Steuereinheit (19) des Fahrzeugs.

10. Bremssystem (1) nach einem der Ansprüche 1 bis 7, umfassend ein BBW-Modul (56) nach Anspruch 8, wobei die Hauptbremspumpe (5) eine Mehrausgang-Kolbenzylindergruppe (58) umfasst, die eine erste Hydraulikleitung (59) aufweist, die mit dem hydraulischen Hauptanschluss (50) des BBW-Moduls (56) verbunden werden kann, und eine zweite Hydraulikleitung (60) aufweist, die direkt mit einem oder mehreren weiteren hydraulischen Bremsen (61) des Fahrzeugs verbunden ist.

11. Bremssystem (1) nach einem der Ansprüche 1 bis 7, umfassend ein erstes Brake By Wire BBW Modul (56) nach Anspruch 8 und ein zweites Brake By Wire-BBW Modul (56') nach Anspruch 8, wobei die Hauptbremspumpe (5) eine Mehrausgang-Kolbenzylindergruppe (58) mit einer ersten Hydraulikleitung (59) umfasst, die mit dem hydraulischen Hauptanschluss (50) des ersten BBW Moduls (56) verbunden werden kann, und mit einer zweiten Hydraulikleitung (60), die mit dem hydraulischen Hauptanschluss (50) des zweiten BBW Moduls (56') verbunden werden kann, und die hydraulischen Bremsanschlüsse (51) des ersten und zweiten BBW Module (56, 56') mit verschiedenen und unabhängig steuerbaren hydraulischen Bremsen (8, 8') oder hydraulischen Bremsgruppen (8, 8') verbunden werden können.

12. Bremssystem (1) nach einem der Ansprüche 1 bis 7, umfassend ein erstes Brake By Wire BBW Modul (56) nach Anspruch 8 und ein zweites Brake By Wire BBW Modul (56') nach Anspruch 8, wobei die Hauptbremspumpe (5) einen einzelnen hydraulischen Ausgang (64) aufweist, der in eine erste Hydraulikleitung (59), die mit dem Hauptanschluss (50) des ersten BBW Moduls (56) verbunden werden kann, und in eine zweite Hydraulikleitung (60) verzweigt wird, die mit dem Hauptanschluss (50) des zweiten BBW Moduls (56') verbunden werden kann, und die Bremsanschlüsse (51) der ersten und zweiten BBW Module (56, 56') unabhängig mit zwei verschiedenen und unabhängig steuerbaren hydraulischen Bremsen (8, 8') oder hydraulischen Bremsgruppen (8, 8') verbunden werden können.

13. Bremssystem (1) nach einem der Ansprüche 1 bis 7, umfassend vier Brake By Wire BBW Module (56, 56', 56", 56‴) nach Anspruch 8, wobei die Hauptbremspumpe (5) eine Kolbenzylindergruppe mit zwei getrennten hydraulischen Ausgängen (64, 64') umfasst, von denen jeder in eine erste Hydraulikleitung (59, 59') und eine zweite Hydraulikleitung (60, 60') verzweigt wird, wobei die vier Hydraulikleitungen (59, 60, 59', 60') mit den hydraulischen Hauptanschlüssen (50) der vier BBW Module (56, 56', 56", 56"') verbunden werden können und die hydraulischen Bremsanschlüsse (51) der vier BBW Module (56, 56', 56", 56‴) unabhängig mit vier hydraulischen Bremsen (8, 8', 8", 8‴) oder vier verschiedenen und unabhängig steuerbaren hydraulischen Bremsgruppen verbunden werden können.

14. Schaltmodul für das Bremssystem (1) nach einem der Ansprüche 1 bis 7, das einzeln hergestellt werden kann und in das Bremssystem (1) installiert werden kann, wobei das Schaltmodul die Schaltvorrichtung (16) umfasst.

15. Schaltvorrichtung (16) für ein schaltbares Bremssystem (1), umfassend ein hydraulisches Auswahlventil (21), das zwischen einer ersten Schaltstellung und einer zweiten Schaltstellung schaltbar ist, eine Schaltbetätigungsvorrichtung (28), die elektrisch auslösbar ist, zum Umschalten des hydraulischen Auswahlventils (21) von der ersten Schaltstellung in die zweite Schaltstellung,
wobei die Schaltvorrichtung (16) ein Verstärkungssystem (30) umfasst, umfassend:
- einen nicht-elektrischen Speicher von potentieller Energie (31), und
- einen schaltbaren Verbinder (32) zum Trennen und zum Verbinden des potentiellen Energiespeichers (31) mit dem hydraulischen Auswahlventil (21),
wobei ein Aktuator (33) eine Betätigungskraft auf den schaltbaren Verbinder (32) ausübt, um den potentiellen Energiespeicher (31) mit dem hydraulischen Auswahlventil (21) zu verbinden, wobei die Betätigungskraft geringer als eine Schaltkraft, die von dem potentiellen Energiespeicher (31) auf das hydraulische Auswahlventil (21) ausgeübt wird, um es in die zweite Schaltstellung zu schalten und zu halten,
**dadurch gekennzeichnet, dass** der nicht-elektrische Speicher (31) umfasst:
einen komprimierten Gasspeicher (34), eine Sprungfeder (35), einen Permanentmagneten (36), und dass der entsprechende schaltbare Verbinder (32) umfasst:
einen pneumatischen Wähler oder ON/OFF-Ventil (37), einen mechanischen Kupplungs/Entkupplungsmechanismus (38), einen magnetischen Kupplungsmechanismus (39) oder einen Verschiebemechanismus (40) eines Permanentmagneten (36).

16. Bremssystem (1) nach einem der Ansprüche 1 bis 7, umfassend:
- eine erste drahtgebundene Verbindung (65) zwischen der elektronischen Steuereinheit (19) des Fahrzeugs und dem elektronischen Steuereinheit (18) zur Übertragung erster Steuersignale der elektronischen Steuereinheit (18), die von einem Prozessor und einer Software der elektronischen Steuereinheit (18) empfangen und verarbeitet werden,
- eine zweite drahtgebundene Verbindung (66) zwischen der elektronischen Steuereinheit (19) des Fahrzeugs und dem Bremssystem (1) für Signale zum Ein-/Ausschalten der Stromversorgung und/oder Signale zum Aktivieren des Schaltbetätigungssystems (28), wobei die zweite drahtgebundene Verbindung (66) von der ersten drahtgebundenen Verbindung (65) getrennt ist und den elektronischen Steuereinheit-Prozessor und Software (18) überbrückt.

## Revendications

1. Un système de freinage (1), en particulier pour véhicules automobiles à motorisation électrique, dans lequel au moins un moteur de traction électrique (2) est relié à au moins un essieu (3) du véhicule et utilisé à la fois comme moteur de traction et comme dispositif de freinage électromagnétique avec récupération d'énergie, le système de freinage (1) comprenant :
A) un circuit de freinage direct (4) avec une pompe maître de frein (5) actionnable au moyen d'un organe d'actionnement par le conducteur (6) et une conduite hydraulique directe (7), qui met la pompe maître de frein (5) en communication avec au moins un frein hydraulique (8) du système de freinage (1),
B) un circuit de freinage indirect (10) avec une pompe de frein contrôlée actionnable électriquement (11) et une conduite hydraulique indirecte (13), qui met la pompe de frein contrôlée (11) en communication avec le frein hydraulique (8) du système de freinage (1),
C) une chambre d'élasticité hydraulique (14), qui délimite intérieurement un volume de conformité extensible contre une précharge élastique d'un organe de réaction élastique (15),
D) au moins un dispositif de commutation (16) actionnable pour commuter le système de freinage (1) entre une configuration de freinage direct et une configuration de freinage indirect, dans lequel :
- dans la configuration de freinage direct, le dispositif de commutation (16) met la pompe maître de frein (5) en communication hydraulique avec le frein hydraulique (8) et interrompt la communication hydraulique entre la pompe de frein contrôlée (11) et le frein hydraulique (8),
- dans la configuration de freinage indirect, le dispositif de commutation (16) met la pompe de frein contrôlée (11) en communication hydraulique avec le frein hydraulique (8) et interrompt la communication hydraulique entre la pompe maître de frein (5) et le frein hydraulique (8) et met la pompe maître de frein (5) en communication avec la chambre d'élasticité hydraulique (14),
E) au moins un contrôleur électronique (18) connecté à la pompe de frein contrôlée (11) et au dispositif de commutation (16),
dans lequel le dispositif de commutation (16) comprend une vanne sélectrice hydraulique (21) comportant :
- une première ouverture (22) en communication avec la pompe maître de frein (5), une seconde ouverture (23) en communication avec la pompe de frein contrôlée (11), une troisième ouverture (24) en communication avec le frein hydraulique (8) et une quatrième ouverture (25) en communication avec la chambre d'élasticité hydraulique (14),
- un organe obturateur (26) formant des passages de communication sélectifs (27, 27', 27", 27‴) et étant coulissant par rapport à la première (22) et à la seconde (23) ouvertures et par rapport aux troisième (24) et quatrième (25) ouvertures, le long d'une course de commutation entre :
- une première position de commutation correspondant à la configuration de freinage direct, dans laquelle la pompe maître de frein (5) est en communication avec le frein hydraulique (8) et la pompe de frein contrôlée (11) est en communication avec la chambre d'élasticité hydraulique (14), et,
- une deuxième position de commutation correspondant à la configuration de freinage indirect, dans laquelle la pompe de frein contrôlée (11) est en liaison avec le frein hydraulique (8) et la pompe maître de frein (5) est en liaison avec la chambre d'élasticité hydraulique (14),
- un système d'actionnement de commutation (28), déclenchable électriquement, pour faire coulisser l'organe obturateur (26) de la première position de commutation vers la deuxième position de commutation,
dans lequel le dispositif de commutation (16) comprend un système d'amplification (30) comprenant :
- un accumulateur d'énergie potentielle non électrique (31), et
- un connecteur commutable (32) pour déconnecter et connecter l'accumulateur d'énergie potentielle (31) à/depuis l'organe obturateur (26) de la vanne sélectrice hydraulique (21), dans lequel un actionneur (33) du système d'actionnement de commutation (28) applique une force d'actionnement au connecteur commutable (32) pour connecter l'accumulateur d'énergie potentielle (31) à l'organe obturateur (26), et ladite force d'actionnement est inférieure à une force de commutation appliquée par l'accumulateur d'énergie potentielle (31) sur l'organe obturateur (26) pour déplacer ou maintenir l'organe obturateur (26) dans la deuxième position de commutation,
**caractérisé en ce que** ledit accumulateur (31) d'énergie potentielle non électrique comprend soit :
- un accumulateur de gaz comprimé (34), un ressort élastique (35), un aimant permanent (36), et le connecteur commutable correspondant (32) comprend soit :
- une vanne sélectrice pneumatique ou vanne ON/OFF (37), un mécanisme d'accouplement/découplage mécanique (38), un mécanisme d'accouplement magnétique (39), ou un mécanisme de déplacement (40) d'un aimant permanent (36).

2. Le système de freinage (1) selon la revendication 1, dans lequel le dispositif de commutation (16) comprend un système de maintien de commutation (29), qui arrête l'organe obturateur (26) dans la deuxième position de commutation au moyen d'une force d'arrêt non électromagnétique, choisie dans le groupe consistant en forces fluidomécaniques, forces élastiques, forces mécaniques, forces magnétiques permanentes,
dans lequel :
- le système de maintien de commutation (29) constitue aussi le système d'amplification (30),
- en cas d'absence totale d'alimentation électrique du système de freinage (1), la vanne sélectrice hydraulique (21) revient automatiquement de façon mécanique à la première position de commutation, correspondant à la configuration de freinage direct.

3. Le système de freinage (1) selon la revendication 1 ou 2, dans lequel l'organe obturateur (26) est coulissant linéairement le long d'une course de commutation linéaire et est en permanence précontraint élastiquement vers la première position de commutation, et le système d'actionnement de commutation (28) comprend un actionneur linéaire et est configuré pour appliquer une poussée translatoire linéaire sur l'organe obturateur (26) vers les première et/ou deuxième positions de commutation respectives.

4. Le système de freinage (1) selon l'une quelconque des revendications précédentes, dans lequel le dispositif de commutation (16) comprend :
- un actionneur pneumatique (41) connecté à l'organe obturateur (26) de la vanne sélectrice hydraulique (21),
- un accumulateur de gaz comprimé (34),
- une vanne pneumatique (37) connectée entre l'accumulateur de gaz comprimé (34) et l'actionneur pneumatique (41),
dans lequel la vanne pneumatique (37) est commandée par le contrôleur électronique (18) et actionnable électriquement, et mobile entre :
- une position fermée, dans laquelle l'accumulateur de gaz comprimé (34) est découplé de l'actionneur pneumatique (41) et l'actionneur pneumatique (41) est connecté à un orifice de ventilation (42), et
- une position ouverte, dans laquelle l'accumulateur de gaz comprimé (34) est mis en communication avec l'actionneur pneumatique (41),
dans lequel :
avec la vanne pneumatique (37) en position ouverte, l'accumulateur de gaz comprimé (34) exerce une pression de gaz sur l'actionneur pneumatique (41), lequel déplace l'organe obturateur (26) de la première position de commutation vers la deuxième position de commutation et continue de pousser et maintenir l'organe obturateur (26) en deuxième position de commutation par la pression fluide du gaz comprimé,
lorsque la vanne pneumatique (37) revient en position fermée, un ressort de rappel (45) pousse l'organe obturateur (26) de la vanne sélectrice hydraulique (21) vers la première position de commutation, libérant ainsi la pression résiduelle de gaz par l'orifice de ventilation (42) et reconnectant la pompe maître de frein (5) au frein hydraulique (8) et la pompe de frein contrôlée (11) à la chambre d'élasticité hydraulique (14).

5. Le système de freinage (1) selon la revendication 4, dans lequel :
- la vanne pneumatique (37) est en permanence précontrainte élastiquement vers la position fermée et sa mise en action électrique provoque son déplacement vers la position ouverte, et
- si la vanne pneumatique (37) n'est pas alimentée électriquement, la vanne pneumatique (37) revient mécaniquement automatiquement à la position fermée, découplant l'accumulateur de gaz (34) de l'actionneur pneumatique (41) de sorte que la vanne sélectrice hydraulique (21) revient automatiquement à la première position de commutation correspondant à la configuration de freinage direct.

6. Le système de freinage (1) selon la revendication 4 ou 5, dans lequel le dispositif de commutation (16) comprend une prise de remplissage de gaz (46) connectée à l'accumulateur de gaz (37) et un capteur de pression de gaz (47) en communication avec l'accumulateur de gaz (37) et en connexion de signal avec le contrôleur électronique (18) et/ou une unité de contrôle du véhicule (19) et configuré pour fournir un signal de pression de gaz.

7. Le système de freinage (1) selon l'une quelconque des revendications 4 à 6, comprenant un capteur de pression d'étrier (49', 49) qui est en communication avec le frein hydraulique (8) et fournit un signal de pression d'étrier, et/ou un capteur de pression commandée (48) qui est en communication avec la pompe de frein contrôlée (11) et configuré pour fournir un signal de pression commandée,
dans lequel le contrôleur électronique (18) commande le dispositif de commutation (16) et la pompe de frein contrôlée (11) en fonction du signal de pression d'étrier et/ou du signal de pression commandée.

8. Un module Brake By Wire BBW (56, 56', 56", 56‴) pour le système de freinage (1) selon l'une quelconque des revendications précédentes, fabriquable et installable individuellement dans ledit système de freinage (1), ledit module BBW (56, 56', 56", 56‴) comprenant :
- ladite conduite hydraulique directe (7) avec un port hydraulique maître (50) pour la connexion à la pompe maître de frein (5) et un port hydraulique de frein (51) pour la connexion au frein hydraulique (8),
- ladite pompe de frein contrôlée (11) avec un entraînement électrique (12) et avec un port de réservoir hydraulique (53) pour la connexion au réservoir hydraulique (20),
- ladite conduite hydraulique indirecte (13),
- ladite chambre d'élasticité hydraulique (14),
- ledit dispositif de commutation (16),
- ledit contrôleur électronique (18),
au moins une interface de connexion de signal (54, 65, 66) pour une connexion à une unité de contrôle électronique (19) du véhicule,
- un connecteur d'alimentation électrique (55).

9. Le module BBW (56, 56', 56", 56"') selon la revendication 8, dans lequel le module BBW (56, 56', 56", 56‴) comprend en outre la pompe maître de frein (5) et le capteur de pression maître (17), et un connecteur de signal maître (57) pour une connexion de signal du capteur de pression maître (17) à une unité de contrôle (19) du véhicule.

10. Le système de freinage (1) **selon l'une quelconque des revendications 1 à 7,** comprenant un module BBW (56) **selon la revendication 8,** dans lequel la pompe maître de frein (5) comprend un ensemble piston-cylindre à sorties multiples (58) ayant une première conduite hydraulique (59) connectable au port hydraulique maître (50) du module BBW (56) et ayant une seconde conduite hydraulique (60) directement connectée à un ou plusieurs autres freins hydrauliques (61) du véhicule.

11. Le système de freinage (1) **selon l'une quelconque des revendications 1 à 7,** comprenant un premier module Brake-By-Wire BBW (56) **selon la revendication 8** et un second module BBW (56') **selon la revendication 8,** dans lequel la pompe maître de frein (5) comprend un ensemble piston-cylindre à sorties multiples (58) avec une première conduite hydraulique (59) connectable au port hydraulique maître (50) du premier module BBW (56) et avec une seconde conduite hydraulique (60) connectable au port hydraulique maître (50) du second module BBW (56'), et les ports hydrauliques de frein (51) des premier et second modules BBW (56, 56') sont connectables à des freins hydrauliques (8, 8') ou des ensembles de freins hydrauliques différents et contrôlables indépendamment (8, 8').

12. Le système de freinage (1) **selon l'une quelconque des revendications** 1 à 7, comprenant un premier module Brake-By-Wire BBW (56) **selon la revendication** 8 et un second module BBW (56') **selon la revendication 8,** dans lequel la pompe maître de frein (5) comprend une sortie hydraulique unique (64) bifurquée en une première conduite hydraulique (59) connectable au port hydraulique maître (50) du premier module BBW (56) et en une seconde conduite hydraulique (60) connectable au port hydraulique maître (50) du second module BBW (56'), et les ports hydrauliques de frein (51) des premier et second modules BBW (56, 56') sont connectables de manière indépendante à deux freins hydrauliques distincts et contrôlables indépendamment (8, 8') ou à deux ensembles de freins hydrauliques distincts et contrôlables indépendamment (8, 8').

13. Le système de freinage (1) **selon l'une quelconque des revendications 1 à 7,** comprenant quatre modules Brake-By-Wire BBW (56, 56', 56", 56‴) **selon la revendication 8,** dans lequel la pompe maître de frein (5) comprend un ensemble piston-cylindre avec deux sorties hydrauliques séparées (64, 64'), chacune desquelles est bifurquée en une première conduite hydraulique (59, 59') et une seconde conduite hydraulique (60, 60'), et les quatre conduites hydrauliques (59, 60, 59', 60') sont connectables aux ports hydrauliques maîtres (50) des quatre modules BBW (56, 56', 56", 56"'), et les ports hydrauliques de frein (51) des quatre modules BBW (56, 56', 56", 56"') sont connectables de manière indépendante à quatre freins hydrauliques distincts (8, 8', 8", 8"') ou quatre groupes de freins hydrauliques différents et indépendamment contrôlables.

14. Un module de commutation pour le système de freinage (1) selon l'une quelconque des revendications de 1 à 7, fabriquable et installable individuellement dans ledit système de freinage (1), ledit module de commutation comprenant ledit dispositif de commutation (16).

15. Un dispositif de commutation (16) pour un système de freinage commutatif (1), comprenant une vanne sélectrice hydraulique (21) commutable sur une première position de commutation et une deuxième position de commutation, un dispositif d'actionnement de commutation (28), déclenchable électriquement, pour commuter la vanne sélectrice hydraulique (21) de la première position de commutation à la deuxième position de commutation,
dans lequel le dispositif de commutation (16) comprend un système d'amplification (30) comprenant :
- un accumulateur d'énergie potentielle non électrique (31), et
- un connecteur commutable (32) pour déconnecter et connecter l'accumulateur d'énergie potentielle (31) à la vanne sélectrice hydraulique (21),
dans lequel un actionneur (33) applique une force d'actionnement au connecteur commutable (32) pour connecter l'accumulateur d'énergie potentielle (31) à la vanne sélectrice hydraulique (21), ladite force d'actionnement étant inférieure à la force de commutation appliquée par l'accumulateur d'énergie potentielle (31) sur la vanne sélectrice hydraulique (21) pour la commuter et la maintenir en deuxième position de commutation,
**caractérisé en ce que** ledit accumulateur non électrique (31) d'énergie potentielle comprend soit :
- un accumulateur de gaz comprimé (34), un ressort élastique (35), un aimant permanent (36), et le connecteur commutable correspondant (32) comprend soit :
- une vanne pneumatique sélectrice ou vanne ON/OFF (37), un mécanisme d'accouplement/découplage mécanique (38), un mécanisme d'accouplement magnétique (39), ou un mécanisme de déplacement (40) d'un aimant permanent (36).

16. Le système de freinage (1) selon l'une des revendications de 1 à 7, comprenant :
- une première liaison câblée (65) entre l'unité de contrôle électronique (19) du véhicule et le contrôleur électronique (18) pour la transmission de premiers signaux de commande du contrôleur électronique (18), lesquels sont reçus et traités par un processeur et un logiciel du contrôleur électronique (18),
- une seconde liaison câblée (66) entre l'unité de contrôle électronique (19) du véhicule et le système de freinage (1) pour des signaux d'activation/désactivation de l'alimentation électrique et/ou des signaux d'activation du dispositif d'actionnement de commutation (28), ladite seconde liaison câblée (66) étant distincte de la première liaison câblée (65) et contournant ledit processeur et logiciel de la commande électronique (18).
